# EUROPÄISCHE PATENTSCHRIFT

(11) **EP 2 417 421 B1**
(45) Veröffentlichungstag und Bekanntmachung des Hinweises auf die Patenterteilung: **08.10.2014**
(21) Anmeldenummer: 09775857.7
(22) Anmeldetag: 08.04.2009
(51) Int. Cl.: G01D 5/20

(54) **POSITIONS-/ WEGMESSSYSTEM MIT KODIERTEM MAßKÖRPER UND KABELLOSEM SENSORKOPF**
POSITION/PATH MEASUREMENT SYSTEM HAVING ENCODED MEASURING BODY AND WIRELESS SENSOR HEAD
SYSTÈME DE MESURE DE POSITION/DÉPLACEMENT DOTÉ D'UN CORPS DE MESURE CODÉ ET D'UNE TÊTE DE CAPTEUR SANS FIL

(43) Veröffentlichungstag der Anmeldung: 15.02.2012
(73) Patentinhaber: BALLUFF GmbH, 73765 Neuhausen (DE)
(72) Erfinder: BURKHARDT, Thomas, 73119 Zell (DE)
(74) Vertreter: Jakelski & Althoff
(86) Internationale Anmeldenummer: PCT/DE2009/000485
(87) Internationale Veröffentlichungsnummer: WO 2010/115384

(56) Entgegenhaltungen:
- EP-A2- 1 744 184
- US-A1- 2002 024 335
- US-A1- 2007 113 652

## Beschreibung

Die Erfindung betrifft ein Positions-/ Wegmesssystem, umfassend einen Sensorkopf mit einem magnetfeldsensitiven Element und einer Spule und einen kodierten Maßkörper, wobei der Maßkörper mindestens einen Inkrementalpositionsbestimmungsbereich mit einer Kodierung in einer Richtung aufweist und der Maßkörper durch einen Strom durchflossen ist, wobei er entweder einen externen Rückleiter aufweist oder dessen Trägermaterial und Abdeckband elektrisch leitend verbunden sind und einer Sensorauswerteelektronik.

Wegsensoren mit magnetisch kodiertem Maßkörper sind in dem Buch "Lineare Weg- und Abstandssensoren" von T. Burkhardt, A. Feinäugle, S. Fericean und A. Forkl, Verlag Moderne Industrie, Die Bibliothek der Technik, Band 271, München, 2004, oder in den Patentschriften US 2002/0024335 A1 und EP 1 744 184 A2 beschrieben.

Die magnetischen Feldlinien, welche vom Maßkörper ausbilden, bilden ein dreidimensionales Vektorfeld. Bei den bisherigen zweiteiligen Systemen bewegt sich der Sensorkopf oberhalb des Maßkörpers in diesem Feld.

Der Maßkörper besteht aus einem Trägerband, einem Inkrementalbestimmungsbereich und einem Abdeckband, wobei das Trägerband und Abdeckband von einem elektrischen Wechselstrom durchflossen werden.

Im Sensorkopf befinden sich magnetfeldsensitive Elemente, die die Komponente des Magnetfeldvektors in der Kodierrichtung messen.

Die Signalgenerierung erfolgt über verschiedene Pfade: zwei magnetisch verstimmbare Brückenschaltungen bilden die Basis für die inkrementale Messung. Entweder werden diese Signale angepasst an Offset und Empfindlichkeit direkt als analoges Signal oder über einen Interpolator - digitalisiert über einen Ausgangstreiber - ausgegeben.

Der Ausgang eines magnetfeldsensitiven Elements bildet die Basis für den Referenzimpuls. Dieses Signal wird entweder über den Interpolator oder direkt ausgegeben. Die Endschaltersignale werden direkt ausgegeben. Die Inkremental- und Referenzsignale werden je nach Konfiguration über verschiedene Treiber ausgegeben. Die Endschalterausgänge haben eine direkte Verbindung zum Kabel.

Der Erfindung liegt die Aufgabe zugrunde, ein Positions-/ Wegmesssystem der eingangs genannten Art bereitzustellen, welches insbesondere mit einem kabellosen Sensorkopf arbeitet, bei dem sowohl die Energieversorgung als auch die Signalübertragung ohne Kabel geschieht.

Diese Aufgabe wird bei dem eingangs genannten Positions-/ Wegmesssystem erfindungsgemäß dadurch gelöst, dass die Sensorauswerteelektronik vom Sensorkopf ausgelagert wird. Daraus ergeben sich drei Bestandteile des Systems: der Maßkörper, ein minimierter, weiterhin beweglicher Sensorkopf und die Sensorauswerteelektronik, wobei die Sensorauswerteelektronik stationär bleibt. Der Sensorkopf enthält überwiegend die Signalkodierung, wird mit Energie versorgt und liefert Signale zur Anwendung. Es wird Energie zum beweglichen Sensorkopf und Signale und/oder Daten vom Sensorkopf kabellos zu der stationären Sensorauswerteelektronik über den Maßkörper übertragen.

Zur Energieübertragung und/ oder Datenübertragung lassen sich das Trägermaterial und/ oder das Abdeckband des Maßkörpers beispielsweise an einem Ende elektrisch leitend verbinden. Sie bilden eine elektrische Windung. Ein eingeprägter Wechselstrom darin erzeugt dann ein wechselndes Magnetfeld.

Im Sensorkopf befindet sich eine Spule. Damit induziert das, durch den Strom im Trägerband und Abdeckband erzeugte wechselnde Magnetfeld in der Spule des Sensorkopfes eine Wechselspannung, welche zur Spannungsversorgung des Sensorkopfes dient.

Bei der erfindungsgemäßen Lösung ist auch die Signal- und/oder Datenübertragung vom kabellosen Sensorkopf vorgesehen. Die Signal- und/oder Datenübertragung kann beispielsweise phasenmoduliert und/oder frequenzmoduliert und/oder amplitudenmoduliert sein, wobei dann die Signalspannungen eine Trägerfrequenz modulieren, die zur Sensorauswerteelektronik übertragen werden und dort die ursprüngliche Spannung wieder herstellen. Dazu muss auf der Empfängerseite jedoch die exakte Trägerfrequenz bekannt sein. Eine eindeutige Frequenz ist beispielsweise die Frequenz des Signals der Spannungsversorgung.

Grundsätzlich kann die Signalübertragung auch gemäß RFID Schnittstellen oder andere Signalübertragungsarten erfolgen.

Insbesondere umfasst die Signalübertragung die Möglichkeit mehrere Signale zu übertragen, wobei jedem Signal eine eigene Frequenz zugeordnet ist. Die unterschiedlichen Frequenzen lassen sich im Sensorkopf auf einfache Art beispielsweise aus einer nichtlinearen Kennlinie und aus der Trägerfrequenz erzeugen und mit den entsprechenden Signalen modulieren.

Vorteilhaft ist es, wenn diese Frequenzen ein Vielfaches der Trägerfrequenz sind.

Werden diese Frequenzen auf die Spule des Sensorkopfes eingekoppelt, so lassen sie sich auf der Empfängerseite wieder auskoppeln. Es ist vorteilhaft, wenn alle Frequenzen auf der Sende- und Empfangsseite starr an die Trägerfrequenz der Energieübertragung gekoppelt sind. Dadurch ergibt sich eine sehr robuste und störsichere Schaltung und Temperatur oder Alterung spielen keine große Rolle.

Vorteilhafterweise werden die empfangenen Signale in der Sensorauswerteelektronik über einen Ausgangstreiber in analoger Form oder über einen Interpolator und Ausgangstreiber in digitaler Form ausgegeben. Ganz besonders vorteilhaft dabei ist, wenn der Abgleich der sin- und cos-Signale im Sensorkopf erfolgt, da die Sensorköpfe dann austauschbar sind.

Es wird dadurch eine kabellose Energieübertragung und eine kabellose Signal- und/oder Datenübertragung des Sensorkopfes bereitgestellt. Da kein Kabel benötigt wird, muss dieses nicht mehr im Gehäuse des Sensorkopfes berücksichtigt werden und es ist keine Schleppkette mehr notwendig.

Es ist alternativ oder zusätzlich möglich, dass eine zweite Wicklung mit einer anderen Windungszahl und einer anderen Position jedoch gleicher Orientierung in Verfahrrichtung im Sensorkopf vorgesehen ist. Dadurch lässt sich beispielsweise die Amplitude der Nutzsignale verbessern.

Grundsätzlich ist auch eine Digitalisierung der Signale und/oder Daten im Sensorkopf möglich. Dabei müssen höhere Frequenzen übertragen werden. Vorteilhafterweise würde dabei eine Trägerfrequenz ausreichen.

Die nachfolgende Beschreibung bevorzugter Ausführungsformen dient im Zusammenhang mit den Zeichnungen der näheren Erläuterung der Erfindung. Es zeigen:
- Figur 1: eine schematische Darstellung eines Ausführungsbeispiels eines erfindungsgemäßen Positions-/ Wegmesssystem mit kodiertem Maßkörper und kabellosem Sensorkopf;
- Figur 2: eine weitere Darstellung eines Teilbereichs eines kodierten Maßkörpers mit Spule eines erfindungsgemäßen Positions-/ Wegmesssystem mit kabellosem Sensorkopf, Darstellung des Maßkörpers seitlich und im Schnitt;
- Figur 3: eine schematische Darstellung eines Ausführungsbeispiels der Datenübertragung eines Signals.

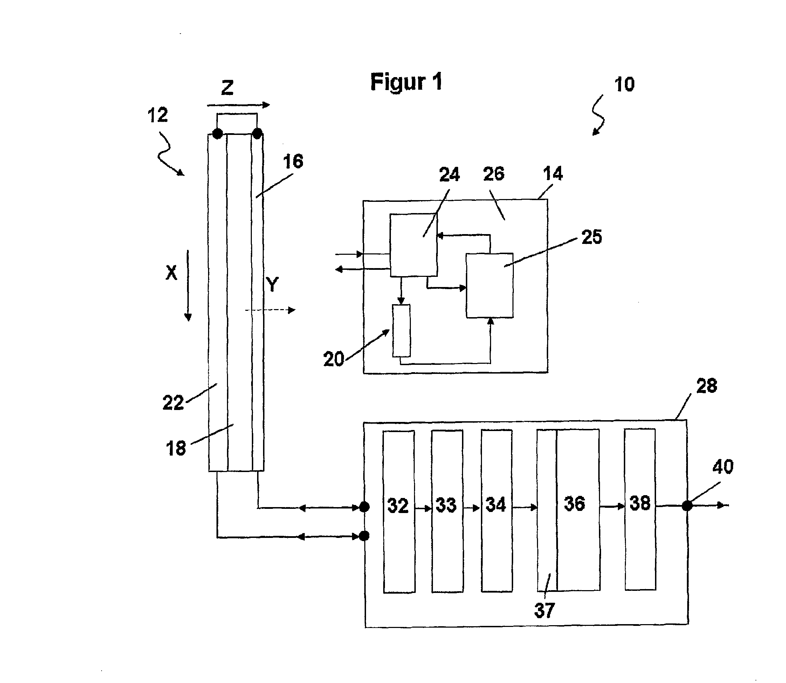

Eine Ausführungsform eines erfindungsgemäßen Positions-/ Wegmesssystems mit kodiertem Maßkörper, Sensorauswertelektronik und kabellosem Sensorkopf, welche in Figur 1 schematisch gezeigt und dort mit 10 bezeichnet ist, umfasst einen magnetisch kodierten Maßkörper 12. Der Maßkörper 12 selber weist ein Trägerband 22 auf, auf welchem die magnetische Kodierung 18 angeordnet ist. Die magnetische Kodierung ist beispielweise durch ein Kunststoffband gebildet, welches flexibel ist und magnetisierbar ist. Die Kodierung des Maßkörpers 12 erfolgt durch eine entsprechende abwechselnde Anordnung von Polfeldern des Typs Nordpol und Polfeldern des Typs Südpol.

Der Inkrementalbestimmungsbereich 18 ist an einem Trägerband 22 fixiert und insbesondere auf dieses geklebt. Auf der anderen Seite des Inkrementalbestimmungsbereich 18 ist beispielsweise ein Abdeckband 16 angeordnet. Das Abdeckband deckt den Inkrementalbestimmungsbereich 18 ab und schützt ihn dabei insbesondere vor mechanischen Beschädigungen.

Das Trägerband 22 und das Abdeckband 16 sind insbesondere aus einem metallischen Material und beispielsweise aus Edelstahl hergestellt und sind elektrisch leitend.

Die Kodierung bestimmt die Feldbeaufschlagung des Sensorkopfes und enthält eine Ortsabhängigkeit. Durch Zählen von magnetischen Perioden, welche über den sich bewegenden Sensorkopf 14 detektiert werden, erhält man Aussage über den zurückgelegten Weg, wobei grundsätzlich eine Richtungsabhängigkeit des Sensorkopfes 14 detektierbar ist.

Der Maßkörper 12 erstreckt sich in einer ersten Richtung x und in einer zweiten Richtung y, welche quer und insbesondere senkrecht zur ersten Richtung x ist. Die erste Richtung x ist eine Messrichtung, in welcher die Position bzw. der Weg des Sensorkopfs 14 relativ zum Maßkörper 12 ermittelbar ist. Der Sensorkopf 14 ist in einer dritten Richtung z beabstandet zu dem Maßkörper 12, wobei die dritte Richtung quer und insbesondere senkrecht zur ersten Richtung x ist und quer und insbesondere senkrecht zur zweiten Richtung y ist.

Der Sensorkopf umfasst eine Mehrzahl von Elementen. Bei der erfindungsgemäßen Lösung umfasst der Sensorkopf 14 ein magnetfeldsensitives Element 20 mit einem oder mehreren Elementen, welche eine Magnetfeldauflösung in der ersten Richtung x aufweisen.

Das magnetfeldsensitive Element 20 ist in einem Gehäuse 26 angeordnet. In dem Gehäuse ist eine Spule 24 zur Spannungsversorgung für das magnetfeldsensitive Element 20 positioniert.

Dem magnetfeldsensitiven Element 20 ist ein Modulator 25 nachgeordnet. Das magnetfeldsensitive Element 20 stellt seine Signale dem Modulator 25 bereit, in dem sie moduliert werden. Dem Modulator 25 ist ein Verstärker 32 nachgeordnet, welcher in der Sensorauswerteelektronik 28 positioniert ist. Die modulierten Signale werden dem Verstärker 32 bereitgestellt, in dem sie verstärkt werden.

Dem Verstärker 32 ist ein Demodulator 33 nachgeordnet, der die verstärkten Signale demoduliert.

Es ist auch möglich, dass dem Verstärker 32 ein Analog/Digital-Wandler 34 nachgeordnet ist, welcher analoge Signale des magnetfeldsensitiven Elements 20 in digitale Signale umwandelt.

Es ist grundsätzlich auch möglich, dass der Sensorkopf bereits digitale Signale bereitstellt.

Die verstärkten, demodulierten und gegebenenfalls gewandelten Signale werden einer Auswerteeinrichtung 36 bereitgestellt. Diese ist insbesondere durch einen Mikrocontroller (oder ASIC oder DSP usw.) gebildet. Sie kann dabei einen Interpolator 37 umfassen.

Die Auswerteeinrichtung 36 stellt die entsprechenden Signale einer Signalanpassungseinrichtung 38 bereit, wobei diese Signale an einem Ausgang 40 der Sensorauswerteelektronik 28 abgreifbar sind.

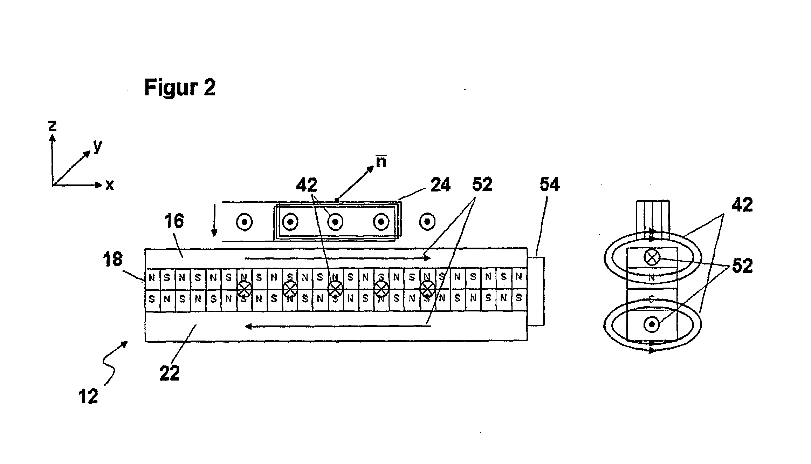

Ein erstes Ausführungsbeispiel eines erfindungsgemäßen kabellosen Positions-/ Wegmesssystem umfasst einen Teilbereich eines kodierten Maßkörpers 12 mit Spule 24 (Figur 2). Die Spule 24 ist so angeordnet, dass sich der Normalvektor n̅, der durch die Spule umschlossenen Fläche, in y-Richtung erstreckt.

Der Maßkörper 12 weist einen Inkrementalbestimmungsbereich 18 auf. Bei dem gezeigten Ausführungsbeispiel umfasst der Inkrementalbestimmungsbereich 18 eine Kodierung. Eine Kodierung umfasst Polfelder mindestens vom Typ Nordpol und vom Typ Südpol. Diese Polfelder sind in der Richtung x alternierend angeordnet. Benachbarte Polfelder weisen dabei eine unterschiedliche Polung auf und übernächst benachbarte Polfelder weisen die gleiche Polung auf. Die Kodierung bestimmt die Feldbeaufschlagung des Sensorkopfes 14 und enthält eine Ortsabhängigkeit. Dadurch kann die Position des Sensorkopfes 14 relativ zu dem Maßkörper 12 (berührungslos) ermittelt werden, indem das entsprechende Signal ausgewertet wird.

Es ist auch möglich, dass das kabellose Positions-/ Wegmesssystem 10 als absolut messendes System realisiert wird. Dazu umfasst die mindestens eine Kodierungslage mindestens eine inkrementale Spur, beispielsweise eine Spur mit absoluter Kodierung. Die sich daraus ergebenden zusätzlichen Sensorsignale werden wie auch beim inkremental messenden System beispielsweise jeweils auf einer eigenen Frequenz übertragen.

Das Trägerband 22 und das Abdeckband 16 sind an einem Ende beispielsweise elektrisch durch eine Brücke 54 verbunden und bilden insbesondere eine elektrische Windung. Durch Einprägen eines sinusförmigen Wechselstroms 52 mit der Frequenz f₀. Dadurch wird ein wechselndes Magnetfeld 42 mit einer Frequenz f₀ erzeugt. Weiterhin wird in der Spule 24 eine Wechselspannung mit der Frequenz f₀ induziert. Beispielsweise dient diese Wechselspannung insbesondere der Spannungsversorgung und als Frequenznormal des Sensorkopfes.

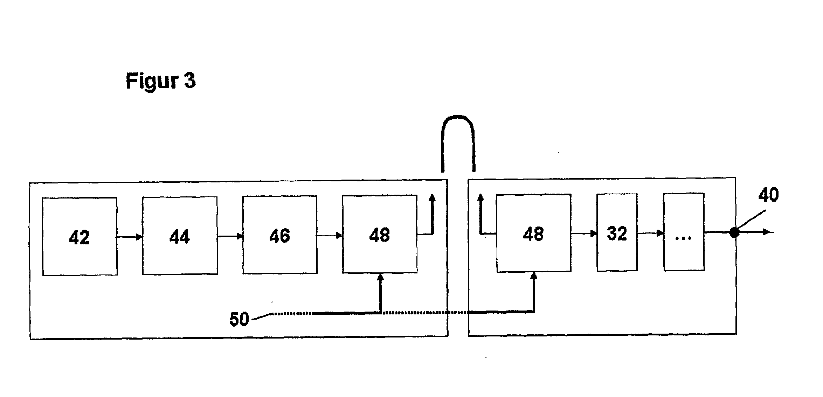

Bei einem Ausführungsbeispiel ist die Datenübertragung eines Signals schematisch dargestellt (Figur 3). Die durch das Wechselmagnetfeld 42 induzierte und über eine Widerstandsbrücke 44 gewonnene Spannung 46 moduliert insbesondere eine Trägerfrequenz 50, die zum Empfänger übertragen wird. Durch eine Frequenzmodulation 48 kann beispielsweise die Spannung auf der Empfängerseite wieder hergestellt werden. Die Trägerfrequenz 50 ist dabei bekannt. Besonders günstig ist grundsätzlich die Frequenz f₀ der Spannungsversorgung als Trägerfrequenz zu verwenden.

Es ist grundsätzlich auch möglich, dass mehrere Signale übertragen werden. Dazu wird jedem Signal eine eigene Trägerfrequenz 50 zugeordnet. Grundsätzlich ist es so, dass die jeweiligen Trägerfrequenzen insbesondere ein Vielfaches der Frequenz f₀ der Spannungsversorgung sein können.

Ansonsten funktioniert die Datenübertragung des kabellosen Positions-/ Wegmesssystem 10 wie oben beschrieben.

## Patentansprüche

1. Positions-/ Wegmesssystem umfassend einen kabellosen Sensorkopf (14) mit einem magnetfeldsensitiven Element (20) und einer Spule (24), eine Sensorauswerteelektronik (28) und einen kodierten Maßkörper (12), **dadurch gekennzeichnet, dass** der Maßkörper (12) aus einem magnetisch nicht leitenden und elektrisch leitenden Trägerband (22), einem Inkrementalbestimmungsbereich (18) und einem magnetisch nicht leitenden und elektrisch leitenden Abdeckband (16) besteht, wobei das Trägerband (22) elektrisch leitend mit dem Abdeckband (16) verbunden ist (54), und dass ein elektrischer Wechselstrom (52) durch den Maßkörper (12) in x-Richtung fließt, durch den ein wechselndes Magnetfeld entsteht.

2. Positions-/ Wegmesssystem nach Anspruch 1, **dadurch gekennzeichnet, dass** die Kodierung des Maßkörpers (12) magnetisch durch eine abwechselnde Anordnung von Polfeldern des Typs Nordpol und Polfelder des Typs Südpol erfolgt.

3. Positions-/ Wegmesssystem nach Anspruch 1 oder 2, **dadurch gekennzeichnet, dass** der Inkrementalbestimmungsbereich (18) auf dem Trägerband (22) liegt.

4. Positions-/ Wegmesssystem nach einem der vorangehenden Ansprüche, **dadurch gekennzeichnet, dass** der Inkrementalbestimmungsbereich (18) direkt an dem Trägerband (22) oder dem Abdeckband (16) fixiert ist.

5. Positions-/ Wegmesssystem nach einem der vorangehenden Ansprüche, **dadurch gekennzeichnet, dass** Signale eines absolut messenden Systems mit einer Spur realisiert werden.

6. Positions-/ Wegmesssystem nach einem der Ansprüche 1 bis 4, **dadurch gekennzeichnet, dass** Signale eines absolut messenden Systems mit mindestens zwei Spuren realisiert werden.

7. Positions-/ Wegmesssystem nach einem der vorangehenden Ansprüche, **dadurch gekennzeichnet, dass** der elektrische Wechselstrom (52) durch den Maßkörper (12) fließt und einen externen Rückleiter aufweist.

8. Positions-/ Wegmesssystem nach einem der Ansprüche 1 bis 6, **dadurch gekennzeichnet, dass** der elektrische Wechselstrom (52) durch das Trägermaterial (22) und das Abdeckband (16) fließt und sowohl das Trägerband (22) als auch das Abdeckband (16) an mindestens einem Ende eine elektrische Kopplung aufweisen.

9. Positions-/ Wegmesssystem nach einem der vorangehenden Ansprüche, **dadurch gekennzeichnet, dass** der Sensorkopf (14) mindestens eine Spule (24) umfasst.

10. Positions-/ Wegmesssystem nach Anspruch 9, **dadurch gekennzeichnet, dass** die Spule (24) so angeordnet ist, dass sich der Normalvektor *n̅*, der durch die Spule (24) umschlossenen Fläche, in y-Richtung erstreckt.

11. Positions-/ Wegmesssystem nach einem der vorangehenden Ansprüche, **dadurch gekennzeichnet, dass** durch den Wechselstrom (52) im Maßkörper (12) ein Wechselmagnetfeld (42) erzeugt wird, das in der Spule (24) eine Wechselspannung (46) induziert.

12. Positions-/ Wegmesssystem nach einem der vorangehenden Ansprüche, **dadurch gekennzeichnet, dass** die Sensorauswerteelektronik (28) vom Sensorkopf (14) getrennt ist.

13. Positions-/ Wegmesssystem nach einem der vorangehenden Ansprüche, **dadurch gekennzeichnet, dass** Energie zum Sensorkopf (14) und Signale vom Sensorkopf (14) übertragen werden.

14. Positions-/ Wegmesssystem nach einem der vorangehenden Ansprüche, **dadurch gekennzeichnet, dass** der Sensorkopf (14) eine kabellose Signal- und/oder Datenübertragung ermöglicht.

15. Positions-/ Wegmesssystem nach Anspruch 14, **dadurch gekennzeichnet, dass** die Signal- und/oder Datenübertragung mehrere Signale und/oder Daten übertragen kann, wobei jedem Signal und/oder allen Daten eine eigene Frequenz zuordenbar ist.

16. Positions-/ Wegmesssystem nach einem der vorangehenden Ansprüche, **dadurch gekennzeichnet, dass** die Signale und/oder Daten über eine Frequenz- und/oder Phasen- (48) und/oder Amplitudenmodulation übertragbar sind.

17. Positions-/ Wegmesssystem nach einem der vorangehenden Ansprüche, **dadurch gekennzeichnet, dass** die Signale und/oder Daten beispielsweise über RFID übertragbar sind.

18. Positions-/ Wegmesssystem nach einem der vorangehenden Ansprüche, **dadurch gekennzeichnet, dass** der Sensorkopf (14) und die Sensorauswerteelektronik (28) in unterschiedlichen Gehäusen angeordnet sind.

## Claims

1. Position/path measurement system having a wireless sensor head (14) with a magnetic field sensitive element (20) and a coil (24), a sensor evaluation electronic (28) and an encoded measuring body (12), **characterized in that** the measuring body (12) consists of a magnetically non-conductive and electroconductive carrier strip (22), an incremental determination area (18) as well as a magnetically non-conductive and electroconductive covering strip (16), wherein the carrier strip (22) is electroconductively connected (54) to the covering strip (16), and **in that** an electric alternating current (52) is flowing through the measuring body (12) in x direction, thus creating an alternating magnetic field.

2. Position/path measurement system according to claim 1, **characterized in that** the encoding of the measuring body (12) is effected magnetically by means of an alternating arrangement of pole fields of the North Pole type and pole fields of the South Pole type.

3. Position/path measurement system according to claim 1 or 2, **characterized in that** the incremental determination area (18) is positioned on the carrier strip (22).

4. Position/path measurement system according to any of the preceding claims, **characterized in that** the incremental determination area (18) is attached directly to the carrier strip (22) or the covering strip (16).

5. Position/path measurement system according to any of the preceding claims, **characterized in that** the signals of an absolute measuring system are realized with one track.

6. Position/path measurement system according to any of the claims 1 to 4, **characterized in that** the signals of an absolute measuring system are realized with at least two tracks.

7. Position/path measurement system according to any of the preceding claims, **characterized in that** the electric alternating current (52) is flowing through the measuring body (12) and has an external return conductor.

8. Position/path measurement system according to any of the claims 1 to 6, **characterized in that** the electric alternating current (52) is flowing through the carrier material (22) and the covering strip (16), and **in that** the carrier strip (22) as well as the covering strip (16) have an electric coupling on at least one of their ends.

9. Position/path measurement system according to any of the preceding claims, **characterized in that** the sensor head (14) has at least one coil (24).

10. Position/path measurement system according to claim 9, **characterized in that** the coil (24) is positioned in such a way that the normal vector *̅n̅*̅ of the area enclosed by the coil (24) extends in y direction.

11. Position/path measurement system according to any of the preceding claims, **characterized in that** an alternating magnetic field (42) is created in the measuring body (12) by the alternating current (52), through which an alternating voltage (46) is induced inside the coil (24).

12. Position/path measurement system according to any of the preceding claims, **characterized in that** the sensor evaluation electronic (28) is separated from the sensor head (14).

13. Position/path measurement system according to any of the preceding claims, **characterized in that** energy is transmitted to the sensor head (14) and signals are transmitted from the sensor head (14).

14. Position/path measurement system according to any of the preceding claims, **characterized in that** the sensor head (14) is enabling the transmission of a wireless signal and/or data.

15. Position/path measurement system according to claim 14, **characterized in that** the signal and/or the data transmission can transmit multiple signals and/or data, wherein a specific frequency can be assigned to every signal and/or to all data.

16. Position/path measurement system according to any of the preceding claims, **characterized in that** the signals and/or data can be transmitted via a frequency and/or phase (48) and/or amplitude modulation.

17. Position/path measurement system according to any of the preceding claims, **characterized in that** the signals and/or data can be transmitted via RFID, for example.

18. Position/path measurement system according to any of the preceding claims, **characterized in that** the sensor head (14) and the sensor evaluation electronic (28) are arranged inside different casings.

## Revendications

1. Système de mesure de position / déplacement comprenant une tête de capteur (14) sans fil avec un élément magnéto-sensible (20) et une bobine (24), une électronique d'exploitation de capteur (28) et une corps de mesure (12), codée,
système **caractérisé en ce que**
- le corps de mesure (12) est un ruban de support (22) non magnétoconducteur mais électro-conducteur, une zone de détermination incrémentale (18) et un ruban de couverture (16) non magnétoconducteur, mais électro-conducteur,
le bande de support (22) étant relié de manière électro-conductrice (54) à la bande de couverture (16), et
- un courant alternatif (52) qui traverse le corps de mesure (12) dans la direction x génère un champ magnétique alternatif.

2. Système de mesure de position / déplacement selon la revendication 1,
**caractérisé en ce que**
le codage du corps de mesure (12) se fait de manière magnétique par une disposition alternée de champs polaires du type Pôle Nord / et de champs polaires de type Pôle Sud.

3. Système de mesure de position / déplacement selon la revendication 1 ou 2,
**caractérisé en ce que**
la région de détermination incrémentale (18) est située sur la bande de support (22).

4. Système de mesure de position / déplacement selon l'une des revendications précédentes,
**caractérisé en ce que**
la région de détermination incrémentale (18) est fixée directement à la bande de support (22) ou à la bande de couverture (16).

5. Système de mesure de position / déplacement selon l'une des revendications précédentes,
**caractérisé en ce qu'**
on réalise les signaux d'un système de mesure absolu avec une trace.

6. Système de mesure de position / déplacement selon l'une des revendications 1 à 4,
**caractérisé en ce qu'**
on réalise les signaux d'un système de mesure absolu ayant au moins deux traces.

7. Système de mesure de position / déplacement selon l'une des revendications précédentes,
**caractérisé en ce que**
le courant alternatif (52) traverse le corps de mesure (12) et comporte un conducteur de retour externe.

8. Système de mesure de position / déplacement selon les revendications 1 à 6,
**caractérisé en ce que**
le courant alternatif (52) traverse la matière de support (22) et la bande de couverture (16) et à la fois la bande de support (22) et la bande de couverture (16) ont un couplage électrique au moins à une extrémité.

9. Système de mesure de position / déplacement selon la revendication précédente,
**caractérisé en ce que**
la tête de capteur (14) comporte au moins une bobine (24).

10. Système de mesure de position / déplacement selon la revendication 9,
**caractérisé en ce que**
la bobine (24) est installée pour que le vecteur normal n à la surface entourée par la bobine (24) soit orienté dans la direction y.

11. Système de mesure de position / déplacement selon l'une quelconque des revendications précédentes,
**caractérisé en ce que**
le courant alternatif (52) dans le corps de mesure (12) génère un champ magnétique alternatif (42) qui induit une tension alternative (46) dans la bobine (24).

12. Système de mesure de position / déplacement selon l'une quelconque des revendications précédentes,
**caractérisé en ce que**
l'électronique d'exploitation de capteur (28) est distincte de la tête de capteur (14).

13. Système de mesure de position / déplacement selon l'une quelconque des revendications précédentes,
**caractérisé en ce qu'**on transmet l'énergie vers la tête de capteur (14) et les signaux venant de la tête de capteur (14).

14. Système de mesure de position / déplacement selon l'une quelconque des revendications précédentes,
**caractérisé en ce que** la tête de capteur (14) permet une transmission sans fil des signaux et/ou des données.

15. Système de mesure de position / déplacement selon la revendication 14,
**caractérisé en ce que**
la transmission des signaux et/ou des données permet de transmettre plusieurs signaux et/ou des données et une fréquence propre est associée à chaque signal et/ou à toutes les données.

16. Système de mesure de position / déplacement selon l'une quelconque des revendications précédentes,
**caractérisé en ce que**
les signaux et/ou les données sont transmis par modulation de fréquente et/ou de phase (48) et/ou d'amplitude.

17. Système de mesure de position / déplacement selon l'une quelconque des revendications précédentes,
**caractérisé en ce que** les signaux et/ou les données sont transmis par exemple par RFID.

18. Système de mesure de position / déplacement selon l'une quelconque des revendications précédentes,
**caractérisé en ce que**
la tête de capteur (14) et l'électronique d'exploitation de capteur (28) sont dans des boîtiers différents.
